# FASCICULE DE BREVET EUROPEEN

(11) **EP 2 754 305 B1**
(45) Date de publication et mention de la délivrance du brevet: **28.08.2019**
(21) Numéro de dépôt: 12762352.8
(22) Date de dépôt: 04.09.2012
(51) Int. Cl.: H04Q 11/00, H04B 10/07

(54) **PROCÉDÉ DE PROTECTION D'UN PON CONTRE L'ÉBLOUISSEMENT PAR UN ONT**
VERFAHREN ZUM SCHUTZ EINES PON VOR DER BLENDWIRKUNG EINES ONT
METHOD FOR PROTECTING A PON FROM GLARE BY AN ONT

(30) Priorité: 05.09.2011 FR 1157831
(43) Date de publication de la demande: 16.07.2014
(73) Titulaire: Orange, 75015 Paris (FR)
(72) Inventeur: CHANCLOU, Philippe, F-22300 Lannion (FR)
(86) Numéro de dépôt international: PCT/FR2012/051975
(87) Numéro de publication internationale: WO 2013/034844

(56) Documents cités:
- CN-A- 101 651 492

## Description

### 1. Domaine de l'invention

Le domaine de l'invention est celui des réseaux d'accès desservant des abonnés à des services de communications électroniques, et plus particulièrement celui des réseaux optiques passifs mettant en oeuvre des modules d'extension.

### 2. Etat de la technique antérieure

Dans un réseau optique passif (PON, pour Passive Optical Network, en anglais) plusieurs terminaux de réseau optique (ONT, pour Optical Network Terminal, en anglais) sont connectés à un même terminal de ligne optique (OLT, pour Optical Line Terminal, en anglais) avec lequel ils échangent des données en mutualisant une même fréquence d'onde optique et une même fibre optique. Des dysfonctionnements peuvent survenir dans divers composants du PON, y compris dans les ONT. L'accès aux ONT est particulièrement difficile du fait que ce sont des équipements situés chez des utilisateurs finaux de services de communications électroniques, ces utilisateurs étant clients de l'opérateur gérant le PON ou clients d'autres opérateurs avec qui le PON est partagé. Pour les dysfonctionnements se situant chez le client il est particulièrement intéressant pour un opérateur de pouvoir disposer d'une méthode de diagnostic et de réparation à distance, ne nécessitant pas de déplacement d'un technicien chez le client.

Il est connu de diagnostiquer à distance un dysfonctionnement d'un ONT par un procédé décrit dans la demande de brevet US 2009/0060496 A1. Le procédé mis en oeuvre dans un OLT consiste à comparer le créneau temporel d'émission de chaque ONT avec un calendrier d'émission autorisé afin d'identifier si l'ONT émet bien à l'intérieur du créneau qui lui a été attribué.

Lorsqu'un ONT émet en dehors de son créneau d'émission, il émet sur un ou plusieurs autres créneaux attribués à un ou plusieurs autres ONT. Cela a pour effet de corrompre le signal optique qui ne pourra plus être correctement décodé par l'OLT. Ce phénomène est communément désigné sous le nom "d'éblouissement" de l'OLT. Plus l'étendue de cette émission hors créneau est grande, plus la corruption du signal est grande, jusqu'à le rendre totalement indécodable par l'OLT si l'émission de l'ONT défaillant se fait par exemple en continu sur toute la bande du calendrier d'émission. Ce dernier cas extrême est observable par exemple si un ONT prévu pour un système optique dit "point à point" (avec un seul ONT par OLT) est connecté par mégarde ou par malice sur un PON qui est un système dit "point à multipoints".

Lorsque qu'un tel dysfonctionnement est diagnostiqué au niveau de l'OLT, l'OLT ébloui ne peut plus traiter correctement les signaux transmis par les ONT. L'inconvénient est que toutes les "branches de l'arbre" PON situées entre l'OLT et les "feuilles" ONT sont impactées.

Il est également connu du protocole OMCI (ONT Management and Control Interface, en anglais), de la norme ITU-T G.988, qu'un OLT puisse envoyer un ordre d'extinction à un ONT, ce qui est particulièrement utile lorsque l'OLT a identifié un ONT en dysfonctionnement.

L'inconvénient de ce mécanisme d'extinction est qu'il n'est pas garanti que l'ONT identifié comme étant en dysfonctionnement soit en mesure d'interpréter correctement les messages en provenance de l'OLT, et en particulier qu'il soit en mesure d'exécuter l'ordre d'extinction. Par exemple si la cause du dysfonctionnement est le branchement d'un ONT non compatible avec l'OLT, par exemple un ONT géré par un opérateur différent de celui gérant l'OLT, l'ordre de l'OLT peut être ignoré par l'ONT, et le dysfonctionnement impactant tout l'arbre PON continue indéfiniment tant qu'une intervention physique chez le client n'est pas entreprise.

La demande de brevet CN101651492A présente une solution pour détecter et déconnecter un groupe d'ONT source d'éblouissement, mais ne présente pas de solution pour un retour à la normale.

Il existe dont un besoin pour une solution ne présentant pas ces inconvénients.

### 3. Exposé de l'invention

L'invention vient améliorer la situation à l'aide d'un procédé de protection d'un réseau optique passif constitué d'un terminal de ligne optique connecté à une pluralité de terminaux de réseau optique groupés par ensemble, conforme à la revendication 1.

Comme chaque ensemble correspond à une branche de l'arbre PON, en effectuant la comparaison au niveau d'un ensemble il est possible d'identifier la branche contenant l'ONT en dysfonctionnement et d'isoler cette branche du reste de l'arbre. De cette manière seuls les ONT d'une seule des branches de l'arbre PON sont impactés par le dysfonctionnement. Ceci est contraire à la technique antérieure où la comparaison est effectuée à la racine de l'arbre, et où une coupure a pour conséquence d'impacter la totalité des branches de l'arbre PON.

Le procédé de protection proposé permet de tenter une résolution rapide du dysfonctionnement dans le cas où l'ONT est capable d'interpréter correctement un ordre de déconnexion. La première information de gestion contient au moins un identifiant de l'ensemble concerné, et un code permettant à l'OLT de reconnaître le type de la requête.

Dans une variante avantageuse, la première information de gestion relative à la déconnexion de l'ensemble comprend en outre les identifiants des terminaux de réseau optique de l'ensemble, au cas où la topologie de connexion des ONT n'est pas connue de l'OLT.

Le procédé de protection proposé permet aussi de déterminer si l'ONT en dysfonctionnement a correctement interprété l'ordre de déconnexion. Si tel est le cas, la reconnexion de l'ensemble prépare le rétablissement du service normal pour tous les ONT de la branche PON correspondant à cet ensemble.

Selon un aspect de l'invention, le procédé de protection est caractérisé en ce que l'étape de reconnexion d'un ensemble est suivie de l'étape suivante:
- émission d'une seconde information de gestion relative à la reconnexion de l'ensemble, comprenant l'identifiant de l'ensemble et une requête de resynchronisation de tous les terminaux de réseau optique de l'ensemble.

L'avantage de cet aspect de l'invention est de signaler que le rétablissement du service normal est possible. La seconde information de gestion contient au moins un identifiant de l'ensemble concerné, et un code permettant à l'OLT de reconnaître le type de la requête.

Dans une variante avantageuse, la seconde information de gestion relative à la reconnexion de l'ensemble comprend en outre les identifiants des terminaux de réseau optique de l'ensemble, au cas où la topologie de connexion des ONT n'est pas connue de l'OLT.

L'invention concerne aussi un procédé de gestion d'un réseau optique passif constitué d'un terminal de ligne optique connecté à une pluralité de terminaux de réseau optique groupés par ensemble, conforme à la revendication 5.

Le procédé de gestion est mis en oeuvre dans l'OLT, qui détermine le calendrier d'émission. L'émission du calendrier d'émission vers une ou plusieurs autres entités permet de déporter ailleurs qu'au niveau de l'OLT la comparaison avec les signaux réellement émis par les ONT. Ces entités sont par exemple des boîtiers d'extension de ligne optique, ou EB (Extender Box, en anglais), comportant un port du côté de l'OLT et plusieurs ports du côté des ONT. Un EB se situe à un embranchement de l'arbre PON, donc à un point intermédiaire entre l'OLT situé à la racine et les ONT situés aux feuilles de l'arbre. L'emplacement des EB permet de diagnostiquer les dysfonctionnements plus près de leur source et de protéger plus facilement les branches sans dysfonctionnement.

A chaque port correspond un ensemble de terminaux de réseau optique. Une façon simple de déconnecter et de reconnecter un ensemble est donc de fermer et de rouvrir un port.

L'OLT reçoit les signaux des ONT et est en mesure d'observer les variations de leur comportement, comme des disparitions ou apparitions de signal. Ces variations peuvent être induites soit par un dysfonctionnement d'ONT, soit par une action d'un EB, comme la fermeture ou la réouverture d'un port. Il est important que l'OLT puisse faire la distinction pour effectuer un meilleur diagnostic et c'est pourquoi l'OLT doit être informé lorsqu'un EB ferme ou rouvre un port, c'est à dire lorsqu'il déconnecte ou reconnecte un ensemble.

En fonction de l'information de gestion reçue, l'OLT émet un ordre approprié vers les ONT concernés dont le résultat sera soit de faire cesser un dysfonctionnement, soit de rétablir un service normal suite à un dysfonctionnement.

L'invention concerne aussi un dispositif de protection d'un réseau optique passif constitué d'un terminal de ligne optique connecté à une pluralité de terminaux de réseau optique groupés par ensemble, conforme à la revendication 6.

L'invention concerne aussi un dispositif de gestion d'un réseau optique passif constitué d'un terminal de ligne optique connecté à une pluralité de terminaux de réseau optique groupés par ensemble, conforme à la revendication 7.

L'invention concerne aussi un boitier d'extension d'un réseau optique passif, situé entre un terminal de ligne optique et une pluralité de terminaux de réseau optique, caractérisé en ce qu'il comprend un dispositif de protection d'un réseau optique passif.

L'invention concerne aussi un terminal de ligne optique d'un réseau optique passif, connecté à une pluralité de terminaux de réseau optique, caractérisé en ce qu'il comprend au moins un dispositif de gestion d'un réseau optique passif.

Selon un aspect de l'invention, le terminal de ligne optique est caractérisé en ce qu'il comprend en outre un dispositif de protection d'un réseau optique passif.

Cet aspect permet de protéger également les branches de l'arbre PON qui ne comportent pas de boitier d'extension entre l'OLT et les ONT.

L'invention concerne aussi un système de protection d'un réseau optique passif constitué d'un terminal de ligne optique connecté à une pluralité de terminaux de réseau optique, ledit système caractérisé en ce qu'il comprend au moins un dispositif de protection d'un réseau optique passif, et au moins un dispositif de gestion d'un réseau optique passif.

L'invention concerne aussi un programme d'ordinateur caractérisé en ce qu'il comprend des instructions pour la mise en oeuvre d'un procédé de protection d'un réseau optique passif, lorsque ce programme est exécuté par un processeur.

L'invention concerne aussi un programme d'ordinateur caractérisé en ce qu'il comprend des instructions pour la mise en oeuvre d'un procédé de gestion d'un réseau optique passif, lorsque ce programme est exécuté par un processeur.

Ces programmes, stockés sur un support lisible par ordinateur, peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

### 4. Présentation des figures

D'autre avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente l'architecture fonctionnelle d'un dispositif de protection selon l'invention, telle que mise en oeuvre dans un boitier d'extension pour réseau optique passif,
- la figure 2 présente à titre d'exemple un calendrier pour un cycle d'émission destiné à un système PON de 16 ONT,
- la figure 3 présente les étapes des procédés de protection et de gestion selon un mode particulier de réalisation de l'invention, dans lequel un ensemble d'ONT est déconnecté,
- la figure 4 présente les étapes des procédés de protection et de gestion selon un mode particulier de réalisation de l'invention, dans lequel un ensemble d'ONT est reconnecté,
- la figure 5 présente la structure d'un boitier d'extension EB mettant en oeuvre le procédé de protection, selon l'invention,
- la figure 6 présente la structure d'un terminal de ligne optique OLT mettant en oeuvre le procédé de gestion d'un PON, selon l'invention,
- la figure 7 présente, pour un mode particulier de l'invention, le système de protection, ainsi que la structure d'un terminal de ligne optique OLT mettant en oeuvre à la fois le procédé de gestion et le procédé de protection d'un PON.

### 5. Description détaillée d'au moins un mode de réalisation de l'invention

Dans la suite de la description, on considère le cas d'un mode de réalisation de l'invention par des éléments opto-électroniques, c'est-à-dire convertissant le signal optique en signal électrique et vice versa, mais d'autres modes de réalisation s'appliquent à l'invention, comme par exemple un mode de réalisation par des éléments entièrement optiques.

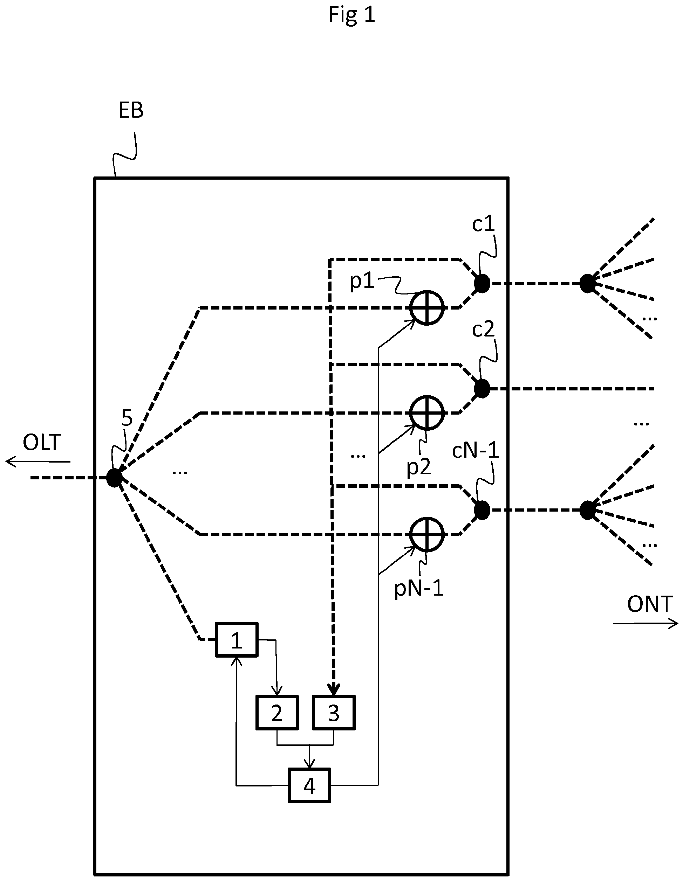

L'architecture fonctionnelle d'un dispositif de protection selon l'invention, telle que mise en oeuvre dans un boitier d'extension pour réseau optique passif PON, selon un mode particulier de réalisation de l'invention, est maintenant présenté, en référence à la **figure 1**.

Dans cet exemple le dispositif est logé dans un boitier d'extension EB situé à un point d'embranchement 1 vers N d'un réseau optique passif PON. L'embranchement est matérialisé par un coupleur 5 connecté d'un côté à un terminal de ligne optique OLT, et de l'autre côté à des terminaux de réseaux optiques ONT, dont le nombre, potentiellement supérieur à N-1, est fonction du nombre et du type de coupleurs 5 supplémentaires situés entre EB et les ONT.

Du côté OLT, EB comprend un émetteur-récepteur, ou transceiver 1 (pour "TRANSmitter-reCEIVER" en anglais) permettant d'échanger avec l'OLT un signal optique dédié à EB. C'est par ce signal optique que EB reçoit le calendrier d'émission des ONT, qui est prélevé par un récepteur 2.

Du côté ONT, EB comprend N-1 ports p1, p2, ... pN-1 desservant les ensembles d'ONT. A chaque port est connecté côté ONT un coupleur de prélèvement ci (i = 1, 2 ... N-1) permettant de prélever le signal montant émis par les ONT. Le détecteur d'enveloppe 3 détecte l'enveloppe électrique des signaux montants.

Le comparateur 4 effectue une comparaison port par port des enveloppes électriques des signaux montants avec le calendrier reçu de l'OLT. Pour chacun des ports dont le signal montant n'est pas en conformité avec le calendrier d'émission, le comparateur 4 prend la décision de fermer le port dans le sens montant. La fermeture est effectuée à un point en aval du coupleur de prélèvement par rapport aux ONT, par exemple au niveau du port pi afin de permettre au détecteur d'enveloppe 3 de continuer à observer tous les signaux montants.

Lorsque le comparateur 4 prend une décision de fermeture, il en informe l'OLT par une information de gestion sur le signal dédié à l'EB, via le transceiver 1. Cette première information de gestion comprend l'identifiant du port concerné, ainsi qu'une requête de cessation d'émettre pour les ONT concernés. Dans le cas où l'OLT ne connait pas la topologie de connexion des ONT à l'EB, cette première information de gestion contient également les identifiants de chacun des ONT connectés au port concerné.

Inversement, si le comparateur 4 constate qu'aucun signal ne parvient à un port fermé, il en déduit que les ONT concernés ont bien exécuté l'ordre de cessation d'émettre requis lors d'une phase précédente. Le comparateur 4 prend alors la décision de rouvrir le port. Il en informe l'OLT par une deuxième information de gestion. Cette deuxième information de gestion comprend l'identifiant du port concerné, ainsi qu'une requête de synchronisation des ONT concernés. Dans le cas où l'OLT ne connait pas la topologie de connexion des ONT à l'EB, cette deuxième information de gestion contient également les identifiants de chacun des ONT connectés au port concerné.

Dans un système PON, chaque cycle d'émission-réception est représenté par une trame, typiquement de 125 ms, dont la durée totale est répartie différemment entre les ONT de l'arbre PON en fonction de leurs besoins respectifs en débit montant (c'est-à-dire en émission, des ONT vers l'OLT).

Lors de chaque cycle et selon des principes connus, l'OLT re-détermine cette répartition en envoyant à tous les ONT un calendrier d'émission à respecter pour le cycle suivant. Dans la technique antérieure, le boitier d'extension EB n'a pas accès à ce calendrier, et seul l'OLT est en mesure de vérifier la conformité des émissions des ONT avec le calendrier. Selon l'invention, EB est considéré par l'OLT comme un des ONT de l'arbre PON, ce qui rend inutile un canal dédié entre OLT et EB. EB reçoit donc le calendrier comme chaque ONT.

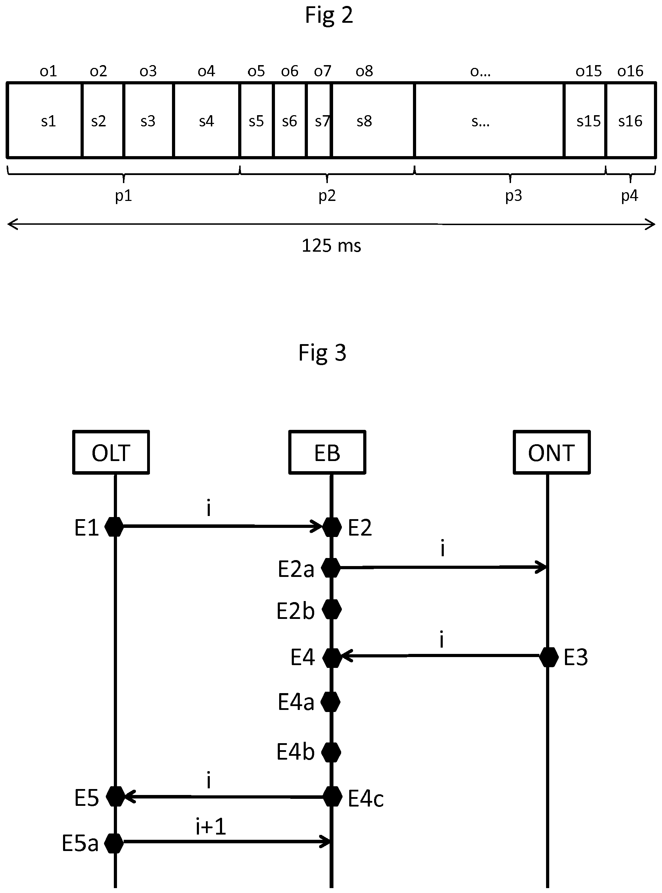

La **figure 2** présente à titre d'exemple un calendrier pour un cycle d'émission destiné à un système PON de 16 ONT (o1 à o16) répartis en 4 ensembles correspondant chacun à un port de l'EB (p1 à p4). On voit qu'à l'intérieur de la trame de 125 ms la taille des créneaux d'émission alloués par l'OLT (s1 à s16) peut grandement varier d'un ONT à l'autre. Ces créneaux peuvent varier d'un cycle à l'autre. On voit aussi que le nombre d'ONT n'est pas nécessairement le même d'un port à l'autre, mais il reste par contre constant d'un cycle à l'autre.

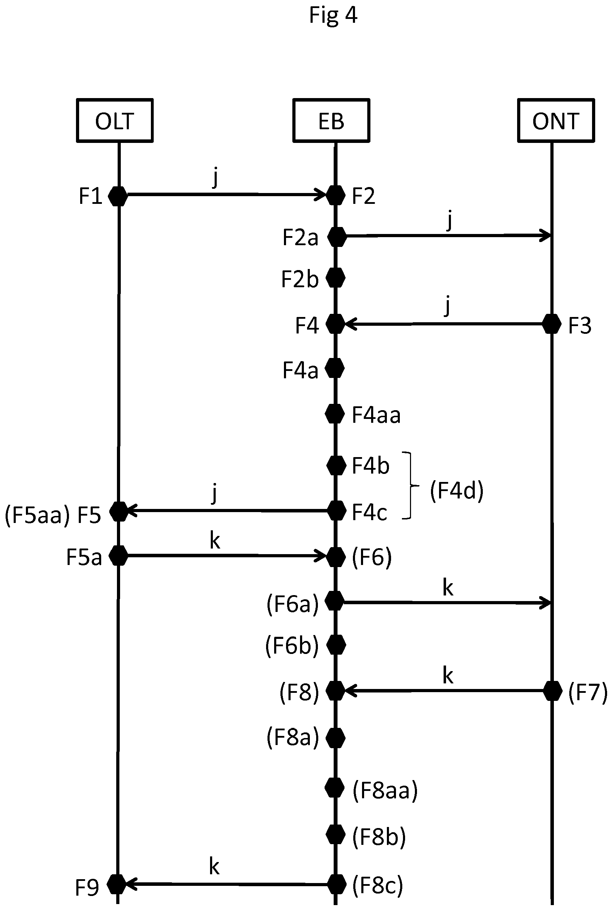

Les **figures 3** **et** **4** présentent les étapes des procédés de protection et de gestion selon l'invention, à l'intérieur des cycles d'émission-réception d'un réseau optique passif PON.

La **figure 3** présente les étapes des procédés de protection et de gestion selon un mode particulier de réalisation de l'invention, dans lequel un ensemble d'ONT est déconnecté. En d'autres termes, ces étapes décrivent la phase de fermeture d'un port de l'EB.

Lors de l'étape E1, l'OLT émet vers les ONT le signal optique descendant du cycle i. Ce signal contient entre autre le calendrier d'émission CAL i pour le cycle i, et est accessible à tous les ONT, y compris l'EB.

Lors de l'étape E2, l'EB reçoit le signal optique, le transmet vers les ONT lors de l'étape E2a, et mémorise CAL i lors de l'étape E2b.

Lors de l'étape E3, les ONT émettent vers l'OLT leur signal optique montant respectif pour le cycle i.

Lors de l'étape E4, l'EB reçoit les signaux optiques. Lors de l'étape E4a, l'EB effectue port par port une comparaison avec CAL i des créneaux d'émission utilisés par les ONT. Si un ONT émet en dehors de son créneau, le port correspondant est fermé lors de l'étape E4b. Par exemple, en se référant à la **figure 2**, si l'ONT o5 émet sur les créneaux s4 et s5, plutôt que sur le seul créneau s5 comme prévu par le calendrier, le port p2 est fermé par l'EB.

Lors de l'étape E4c, les signaux optiques des ONT sont transmis par l'EB vers l'OLT, sauf les signaux optiques des ONT correspondant au port fermé (p2, dans notre exemple) qui ne sont pas transmis vers l'OLT à partir de ce cycle i. De cette manière, les ONT dont le créneau a été usurpé lors du cycle i ne seront plus impactés à partir du cycle i+1 (l'ONT o4 dont le créneau à été usurpé par l'ONT o5, dans notre exemple).

Les signaux transmis vers l'OLT lors de l'étape E4c comprennent également le signal émis par l'EB, qui inclut une information de gestion destiné à l'OLT. Cette information de gestion, reçue par l'OLT lors de l'étape E5, contient l'identifiant du port fermé, ainsi qu'une requête de cessation d'émettre pour les ONT correspondant au port fermé. Dans le cas où l'OLT ne connait pas la topologie de connexion des ONT à l'EB, cette information de gestion contient également les identifiants de chacun des ONT connectés au port concerné.

Lors de l'étape E5a, l'OLT émet, pour le cycle i+1, le signal optique descendant vers les ONT. Ce signal contient, entre autre, le calendrier d'émission CAL i+1 pour le cycle i+1, et, dans les parties du signal destinées aux ONT correspondant au port fermé lors du cycle i, un ordre de cessation d'émettre.

La **figure 4** présente les étapes des procédés de protection et de gestion selon un mode particulier de réalisation de l'invention, dans lequel un ensemble d'ONT est reconnecté. En d'autres termes, ces étapes décrivent la phase de réouverture d'un port de l'EB.

Lors de l'étape F1, l'OLT émet vers les ONT le signal optique descendant du cycle j ultérieur au cycle i, j étant supérieur ou égal à i+1. Ce signal contient entre autre le calendrier d'émission CAL j pour le cycle j, et est accessible à tous les ONT, y compris l'EB.

Lors de l'étape F2, l'EB reçoit le signal optique, le transmet vers les ONT lors de l'étape F2a, et mémorise CAL j lors de l'étape F2b.

Lors de l'étape F3, les ONT émettent vers l'OLT leur signal optique montant respectif pour le cycle j.

Lors de l'étape F4, l'EB reçoit les signaux optiques. Lors de l'étape F4a, l'EB effectue port par port une comparaison avec CAL j des créneaux d'émission utilisés par les ONT. Lors de l'étape F4aa il est vérifié si tous les ONT correspondant à un port fermé lors du cycle i ont cessé d'émettre. Si tel est le cas, le port correspondant est rouvert lors de l'étape F4b. Par exemple, en se référant à la **figure 2**, si les ONT o5 à o8 n'émettent plus, c'est-à-dire si les créneaux s5 à s8 sont vides, on peut supposer que les ONT o5 à o8 ont correctement exécuté un ordre de cessation d'émettre, et le port p2 est rouvert par l'EB.

Alternativement, si tous les ONT correspondant à un port fermé lors du cycle i n'ont pas cessé d'émettre, le port correspondant n'est pas rouvert, et on revient à l'étape E4c du cycle i, décrite en référence à la **figure 3**.

Autrement, si la cessation d'émettre est constatée, lors de l'étape F4c, les signaux optiques des ONT sont transmis par l'EB vers l'OLT, y compris les signaux optiques des ONT correspondant au port qui a été rouvert (p2, dans notre exemple).

Les signaux transmis vers l'OLT lors de l'étape F4c comprennent également le signal émis par l'EB, qui inclut une information de gestion destiné à l'OLT. Cette information de gestion, reçue par l'OLT lors de l'étape F5, contient l'identifiant du port rouvert, ainsi qu'une requête de synchronisation pour les ONT correspondant au port rouvert. Dans le cas où l'OLT ne connait pas la topologie de connexion des ONT à l'EB, cette information de gestion contient également les identifiants de chacun des ONT connectés au port concerné.

Lors de l'étape F5a, l'OLT émet, pour le cycle j+1, le signal optique descendant vers les ONT. Ce signal contient, entre autre, le calendrier d'émission CAL j+1 pour le cycle j+1, et, dans les parties du signal destinées aux ONT correspondant au port rouvert lors du cycle j, un ordre de synchronisation.

Dans un mode de réalisation alternatif, le port fermé n'est pas rouvert lors du cycle j, c'est-à-dire immédiatement après que la cessation d'émission ait été vérifiée par l'EB, mais lors d'un cycle k ultérieur au cycle j, k étant supérieur ou égal à j+1, c'est à dire après que l'EB ait pu vérifier que les ONT correspondant au port fermé ont bien été correctement re-synchonisés. En effet, la vérification de la cessation d'émettre peut ne pas être une condition suffisante de retour du service à la normale, si par exemple l'ONT en dysfonctionnement combine l'absence d'émission sur son créneau, la présence d'émission sur au moins un autre, et l'impossibilité de correctement exécuter l'ordre de cessation d'émettre. C'est pourquoi il peut être aussi nécessaire de faire vérifier par l'EB que l'ONT en dysfonctionnement est bien capable d'exécuter les ordres envoyés par l'OLT.

Dans ce mode de réalisation alternatif, les étapes F4b et F4c sont remplacées par une étape F4d, et les étapes F6 à F9 sont rajoutées. Les étapes de ce mode de réalisation alternatif sont entre parenthèses dans la **figure 4**.

Lors de l'étape F4d, le port fermé n'est pas rouvert et les signaux optiques des ONT sont transmis par l'EB vers l'OLT, sauf les signaux optiques des ONT correspondant au port toujours fermé (p2, dans notre exemple), qui depuis le cycle i ne sont plus transmis vers l'OLT.

Les signaux transmis vers l'OLT lors de l'étape F4d comprennent également le signal émis par l'EB, qui inclut une information de gestion destiné à l'OLT. Cette information de gestion, reçue par l'OLT lors de l'étape F5aa, contient l'identifiant du port fermé, ainsi qu'une requête de synchronisation pour les ONT correspondant au port fermé. Dans le cas où l'OLT ne connait pas la topologie de connexion des ONT à l'EB, cette information de gestion contient également les identifiants de chacun des ONT connectés au port concerné.

L'étape F5a précédemment décrite suit l'étape F5aa.

Les étapes F6, F6a, F6b, F7 et F8 sont identiques respectivement aux étapes F2, F2a, F2b, F3 et F4, la seule différence étant la présence d'un ordre de synchronisation à destination du ou des ONT concernés, à la place d'un ordre de cessation d'émettre.

Lors de l'étape F8a, l'EB effectue port par port une comparaison entre CAL k et les créneaux d'émission utilisés par les ONT. Lors de l'étape F8aa il est vérifié si tous les ONT correspondant au port fermé lors du cycle i émettent correctement dans leur créneau tel que prévu dans le CAL k. Si tel est le cas, le port correspondant est rouvert lors de l'étape F8b. Par exemple, en se référant à la **figure 2**, si les ONT o5 à o8 émettent dans les créneaux s5 à s8, on peut supposer que les ONT o5 à o8 ont correctement exécuté un ordre de cessation d'émettre lors du cycle j, puis un ordre de synchronisation lors du cycle k, et le port p2 est rouvert par l'EB.

Alternativement, si au contraire tous les ONT correspondant à un port fermé lors du cycle i n'émettent pas correctement dans leur créneau tel que prévu dans CAL k, le port correspondant n'est pas rouvert, et on revient à l'étape F4d.

Autrement, si la resynchronisation est constatée, lors de l'étape F8c, les signaux optiques des ONT sont transmis par l'EB vers l'OLT, y compris les signaux optiques des ONT correspondant au port qui a été rouvert (p2, dans notre exemple), et y compris une information de gestion destinée à l'OLT. Cette information de gestion, reçue par l'OLT lors de l'étape F9, contient l'identifiant du port rouvert. Dans le cas où l'OLT ne connait pas la topologie de connexion des ONT à l'EB, cette information de gestion contient également les identifiants de chacun des ONT connectés au port concerné. L'absence de requête de cessation d'émettre ou de requête de resynchronisation dans cette information de gestion indique que, du point de vue de l'EB, le service est revenu à la normale. L'information de gestion contient à la place une requête "nulle", ou aucune requête.

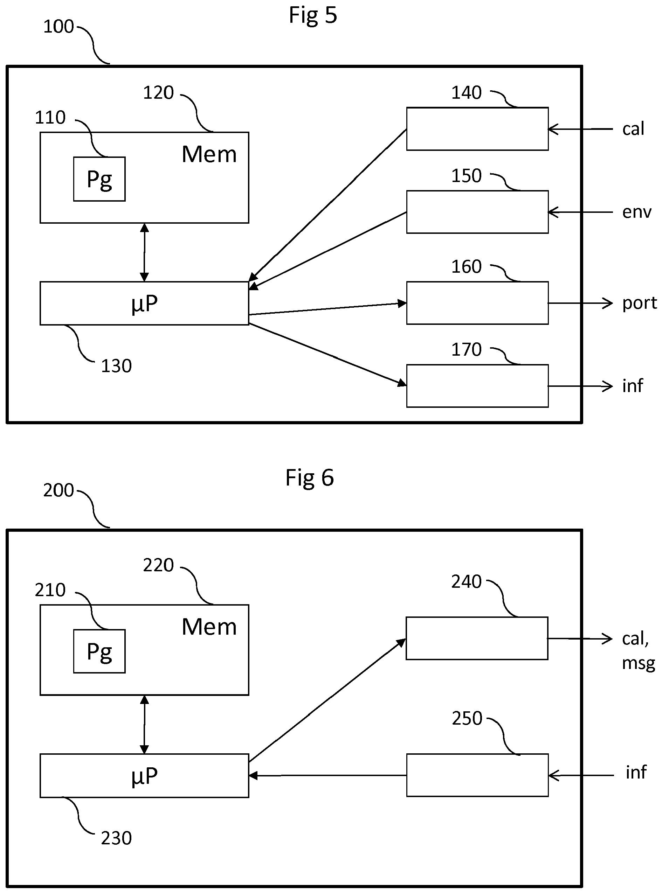

En relation avec la **figure 5**, on présente maintenant la structure d'un boitier d'extension EB mettant en oeuvre le procédé de protection d'un PON, selon l'invention.

Selon un aspect de l'invention, ce boitier d'extension EB comprend un dispositif 100 de protection. Le dispositif de protection 100 selon l'invention comprend :
- un module de réception de calendrier 140, apte à recevoir un calendrier d'émission extrait du signal optique descendant de l'OLT,
- un module de réception d'enveloppes 150, apte à recevoir les enveloppes des signaux optiques montant des ONT,
- un module interrupteur 160, apte à interrompre et à rétablir le trafic montant d'un port de l'EB,
- un module de requête 170, apte à insérer des informations de gestion dans le signal optique à destination de l'OLT.

Le calendrier et les enveloppes sont traitées par une unité de traitement 130 équipée d'un microprocesseur apte à mettre en oeuvre les moyens constitutifs de l'invention tels que décrits précédemment, en particulier, des moyens de comparaison port par port du calendrier avec les enveloppes des signaux optiques, de décision de fermeture et de réouverture de port, de décision d'émission d'informations de gestion.

Le dispositif de protection 100 selon l'invention comprend en outre une mémoire 120 dans laquelle est stockée un programme d'ordinateur 110 mettant en oeuvre les étapes du procédé de protection. A l'initialisation, les instructions de code du programme d'ordinateur 110 sont par exemple chargées dans une mémoire RAM, avant d'être exécutées par le processeur de l'unité de traitement 130.

En relation avec la **figure 6**, on présente maintenant la structure d'un terminal de ligne optique OLT, mettant en oeuvre le procédé de gestion d'un PON selon l'invention.

Selon un aspect de l'invention, ce terminal de ligne optique OLT comprend un dispositif 200 de gestion. Le dispositif de gestion 200 selon l'invention comprend :
- un module d'émission 240, apte à émettre vers les ONT un calendrier et des messages de gestion incluant des ordres de cessation d'émettre et des ordres de synchronisation,
- un module de réception 250, apte à extraire des informations du signal en provenance de l'EB.

Les requêtes sont traitées par une unité de traitement 230 équipée d'un microprocesseur apte à mettre en oeuvre les moyens constitutifs de l'invention tels que décrits précédemment, en particulier, des moyens de réception et de traitement d'informations de gestion en provenance de l'EB.

Le dispositif de gestion 200 selon l'invention comprend en outre une mémoire 220 dans laquelle est stockée un programme d'ordinateur 210 mettant en oeuvre les étapes du procédé de gestion. A l'initialisation, les instructions de code du programme d'ordinateur 210 sont par exemple chargées dans une mémoire RAM, avant d'être exécutées par le processeur de l'unité de traitement 230.

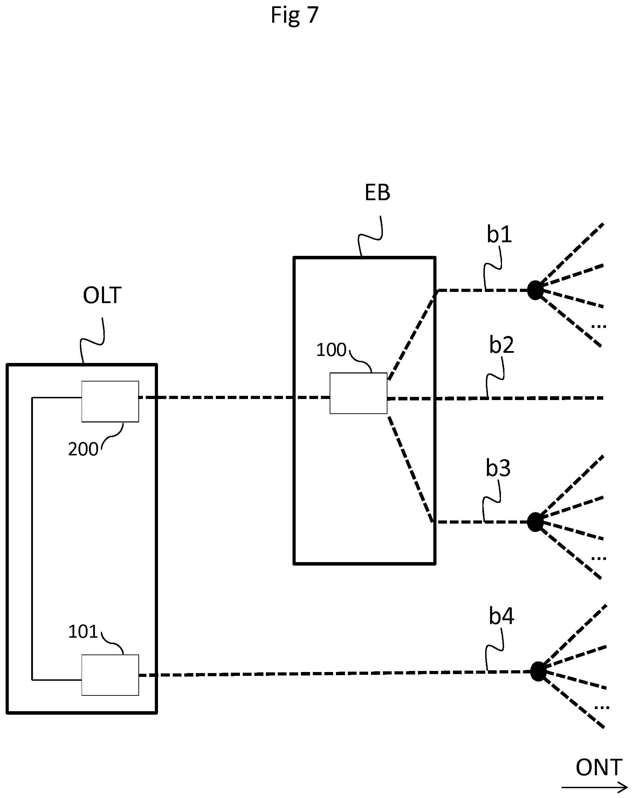

En relation avec la **figure 7**, on présente maintenant, pour un mode particulier de l'invention, le système de protection ainsi que la structure d'un terminal de ligne optique OLT.

Dans ce mode de réalisation particulier, contrairement aux branches b1, b2 et b3, la branche b4 de l'arbre PON ne comporte pas de boitier d'extension EB entre l'OLT et les ONT. Afin de protéger cette branche de la même façon que les autres, le terminal de ligne optique OLT comprend aussi un dispositif de protection 101 selon l'invention, en plus du dispositif de gestion 200 selon l'invention. Les échanges d'informations de gestion selon l'invention, entre le dispositif 200 et le dispositif 101, sont les mêmes que précédemment décrits entre le dispositif 200 et le dispositif 100.

Les exemples de réalisation de l'invention qui viennent d'être présentés ne sont que quelques uns des modes de réalisation envisageables. Ils montrent que l'invention permet de limiter l'impact du dysfonctionnement d'un ONT à une partie des ONT d'un PON, tout en éliminant le dysfonctionnement à distance sans faire déplacer de technicien.

## Revendications

1. **Procédé de protection** d'un réseau optique passif constitué d'un terminal de ligne optique connecté à une pluralité de terminaux de réseau optique groupés par ensemble, mis en oeuvre dans un boitier d'extension situé entre le terminal de ligne optique et la pluralité de terminaux de réseau optique, comprenant les étapes suivantes:
- obtention (E2, F2) d'un calendrier d'émission des terminaux de réseau optique,
- comparaison (E4a, F4a), par ensemble, du calendrier avec les signaux émis par les terminaux de réseau optique,
et si au moins un terminal de réseau optique d'un ensemble n'émet pas en synchronisation avec le calendrier:
- déconnexion (E4b) de cet ensemble,
le procédé étant **caractérisé en ce qu'**il comprend en outre les étapes suivantes:
- émission (E4c, F4d), à destination du terminal de ligne optique, d'une première information de gestion relative à la déconnexion de l'ensemble, comprenant l'identifiant de l'ensemble et une requête de cessation d'émission de tous les terminaux de réseau optique de l'ensemble,
- vérification (F4aa) de la cessation d'émission des terminaux de réseau optique de l'ensemble,
- reconnexion (F4b) de l'ensemble si la cessation d'émission est vérifiée.

2. **Procédé de protection** selon la revendication 1 où la première information de gestion relative à la déconnexion de l'ensemble comprend en outre les identifiants des terminaux de réseau optique de l'ensemble.

3. **Procédé de protection** selon la revendication 1 où l'étape de reconnexion d'un ensemble est suivie de l'étape suivante:
- émission (F4c), à destination du terminal de ligne optique, d'une seconde information de gestion relative à la reconnexion de l'ensemble, comprenant l'identifiant de l'ensemble et une requête de resynchronisation de tous les terminaux de réseau optique de l'ensemble.

4. **Procédé de protection** selon la revendication 3 où la seconde information de gestion relative à la reconnexion de l'ensemble comprend en outre les identifiants des terminaux de réseau optique de l'ensemble.

5. **Procédé de gestion** d'un réseau optique passif constitué d'un terminal de ligne optique connecté à une pluralité de terminaux de réseau optique groupés par ensemble, mis en oeuvre par le terminal de ligne optique et **caractérisé en ce qu'**il comprend l'étape suivante:
- réception (E5, F5, F5aa, F9), en provenance d'un boitier d'extension situé entre le terminal de ligne optique et la pluralité de terminaux de réseau optique, d'une information de gestion relative à la déconnexion ou à la reconnexion d'un ensemble de terminaux de ligne optique, suite à une comparaison d'un calendrier d'émission avec les signaux émis par ces terminaux, l'information de gestion comprenant l'identifiant de l'ensemble et une requête de cessation d'émission ou de synchronisation de tous les terminaux de réseau optique de l'ensemble,
préalablement à l'une des étapes suivantes:
- émission (E5a) d'un ordre de cessation d'émission de tous les terminaux de réseau optique de l'ensemble, si l'information de gestion concerne une déconnexion,
- émission (F5a) d'un ordre de resynchronisation de tous les terminaux de réseau optique de l'ensemble, si l'information de gestion concerne une reconnexion.

6. **Dispositif de protection** (100, 101) pour un réseau optique passif constitué d'un terminal de ligne optique connecté à une pluralité de terminaux de réseau optique groupés par ensemble, comprenant :
- un module (140) d'obtention d'un calendrier d'émission des terminaux de réseau optique,
- des moyens (130) de comparaison, par ensemble, du calendrier avec les signaux émis par les terminaux de réseau optique, et de décision de déconnexion et de reconnexion d'un ensemble,
- un module (160) interrupteur apte à déconnecter et à reconnecter l'ensemble,
le dispositif étant **caractérisé en ce qu'**il comprend en outre :
- un module (170) de requête apte à insérer des informations de gestion dans un signal optique à destination du terminal de ligne optique, les informations de gestion comprenant l'identifiant de l'ensemble et une requête de cessation d'émission ou de synchronisation de tous les terminaux de réseau optique de l'ensemble.

7. **Dispositif de gestion** (200) pour un réseau optique passif constitué d'un terminal de ligne optique connecté à une pluralité de terminaux de réseau optique groupés par ensemble, **caractérisé en ce qu'**il comprend un module de réception (250) apte à extraire d'un signal en provenance d'un boitier d'extension, situé entre le terminal de ligne optique et la pluralité de terminaux de réseau optique, une information de gestion relative à la déconnexion ou à la reconnexion d'un ensemble de terminaux de ligne optique, suite à une comparaison d'un calendrier d'émission avec les signaux émis par ces terminaux, l'information de gestion comprenant l'identifiant de l'ensemble et une requête de cessation d'émission ou de synchronisation de tous les terminaux de réseau optique de l'ensemble, et un module d'émission (240) du calendrier et de messages de gestion incluant des ordres de cessation d'émettre et des ordres de synchronisation.

8. **Boitier d'extension** pour un réseau optique passif, apte à être situé entre un terminal de ligne optique et une pluralité de terminaux de réseau optique, **caractérisé en ce qu'**il comprend un dispositif de protection (100, 101) d'un réseau optique passif selon la revendication 6.

9. **Terminal de ligne optique** pour un réseau optique passif, apte à être connecté à une pluralité de terminaux de réseau optique, **caractérisé en ce qu'**il comprend au moins un dispositif de gestion (200) d'un réseau optique passif selon la revendication 7.

10. **Terminal de ligne optique** selon la revendication 9, **caractérisé en ce qu'**il comprend en outre un dispositif de protection (101) pour un réseau optique passif selon la revendication 6.

11. **Système de protection** d'un réseau optique passif constitué d'un terminal de ligne optique connecté à une pluralité de terminaux de réseau optique, **caractérisé en ce qu'**il comprend au moins un dispositif de protection (100, 101) pour un réseau optique passif selon la revendication 6, et au moins un dispositif de gestion (200) pour un réseau optique passif selon la revendication 7.

12. **Programme** d'ordinateur **caractérisé en ce qu'**il comprend des instructions pour la mise en oeuvre d'un procédé de protection d'un réseau optique passif, selon la revendication 1, lorsque ce programme est exécuté par un processeur.

13. **Programme** d'ordinateur **caractérisé en ce qu'**il comprend des instructions pour la mise en oeuvre d'un procédé de gestion d'un réseau optique passif, selon la revendication 5, lorsque ce programme est exécuté par un processeur.

## Patentansprüche

1. Verfahren zum Schutz eines passiven optischen Netzwerks, das aus einem optischen Leitungsendgerät besteht, welches mit einer Vielzahl von zu Gruppen zusammengefassten optischen Netzwerkendgeräten verbunden ist, wobei das Verfahren in einem Erweiterungsgehäuse ausgeführt wird, das zwischen dem optischen Leitungsendgerät und der Vielzahl von optischen Netzwerkendgeräten angeordnet ist, umfassend die folgenden Schritte:
- Erhalten (E2, F2) eines Sendezeitplans der optischen Netzwerkendgeräte,
- Vergleichen (E4a, F4a), je Gruppe, des Zeitplans mit den von den optischen Netzwerkendgeräten gesendeten Signalen,
und wenn mindestens ein optisches Netzwerkendgerät einer Gruppe nicht synchron zum Zeitplan sendet:
- Trennen (E4b) dieser Gruppe,
wobei das Verfahren **dadurch gekennzeichnet ist, dass** es ferner die folgenden Schritte umfasst:
- Senden (E4c, F4d), an das optische Leitungsendgerät, einer ersten Verwaltungsinformation bezüglich des Trennens der Gruppe, umfassend die Kennung der Gruppe und eine Aufforderung zum Beenden des Sendens aller optischen Netzwerkendgeräte der Gruppe,
- Überprüfen (F4aa) des Beendens des Sendens der optischen Netzwerkendgeräte der Gruppe,
- Wiederverbinden (F4b) der Gruppe, wenn das Beenden des Sendens überprüft wurde.

2. Schutzverfahren nach Anspruch 1, bei dem die erste Verwaltungsinformation bezüglich des Trennens der Gruppe ferner die Kennungen der optischen Netzwerkendgeräte der Gruppe umfasst.

3. Schutzverfahren nach Anspruch 1, wobei auf den Schritt des Wiederverbindens einer Gruppe der folgende Schritt folgt:
- Senden (F4c), an das optische Leitungsendgerät, einer zweiten Verwaltungsinformation bezüglich des Wiederverbindens der Gruppe, umfassend die Kennung der Gruppe und eine Aufforderung zum erneuten Synchronisieren aller optischen Netzwerkendgeräte der Gruppe.

4. Schutzverfahren nach Anspruch 3, bei dem die zweite Verwaltungsinformation bezüglich des Wiederverbindens der Gruppe ferner die Kennungen der optischen Netzwerkendgeräte der Gruppe umfasst.

5. Verfahren zum Schutz eines passiven optischen Netzwerks, das aus einem optischen Leitungsendgerät besteht, welches mit einer Vielzahl von zu Gruppen zusammengefassten optischen Netzwerkendgeräten verbunden ist, wobei das Verfahren vom optischen Leitungsendgerät ausgeführt wird und **dadurch gekennzeichnet ist, dass** es den folgenden Schritt umfasst:
- Empfangen (E5, F5, F5aa, F9), von einem zwischen dem optischen Leitungsendgerät und der Vielzahl von optischen Netzwerkendgeräten angeordneten Erweiterungsgehäuse, einer Verwaltungsinformation bezüglich des Trennens oder Wiederverbindens einer Gruppe von optischen Leitungsendgeräten nach einem Vergleichen eines Sendezeitplans mit den von diesen Endgeräten gesendeten Signalen, wobei die Verwaltungsinformation die Kennung der Gruppe und eine Aufforderung zum Beenden des Sendens oder zum Synchronisieren aller optischen Netzwerkendgeräte der Gruppe umfasst,
vor einem der folgenden Schritte:
- Senden (E5a) eines Befehls zum Beenden des Sendens aller optischen Netzwerkendgeräte der Gruppe, wenn die Verwaltungsinformation ein Trennen betrifft,
- Senden (F5a) eines Befehls zum erneuten Synchronisieren aller optischen Netzwerkendgeräte der Gruppe, wenn die Verwaltungsinformation ein Wiederverbinden betrifft.

6. Schutzvorrichtung (100, 101) für ein passives optisches Netzwerk, das aus einem optischen Leitungsendgerät besteht, welches mit einer Vielzahl von zu Gruppen zusammengefassten optischen Netzwerkendgeräten verbunden ist, umfassend:
- ein Modul (140) zum Erhalten eines Sendezeitplans der optischen Netzwerkendgeräte,
- Mittel (130) zum Vergleichen, je Gruppe, des Zeitplans mit den von den optischen Netzwerkendgeräten gesendeten Signalen und zum Entscheiden über das Trennen und Wiederverbinden einer Gruppe,
- ein Schaltermodul (160), das geeignet ist, die Gruppe zu trennen und wieder zu verbinden, wobei die Vorrichtung **dadurch gekennzeichnet ist, dass** sie ferner umfasst:
- ein Aufforderungsmodul (170), das geeignet ist, Verwaltungsinformationen in ein an das optische Leitungsendgerät gerichtetes optisches Signal einzufügen, wobei die Verwaltungsinformationen die Kennung der Gruppe und eine Aufforderung zum Beenden des Sendens oder zum Synchronisieren aller optischen Netzwerkendgeräte der Gruppe umfasst.

7. Verwaltungsvorrichtung (200) für ein passives optisches Netzwerk, das aus einem optischen Leitungsendgerät besteht, welches mit einer Vielzahl von zu Gruppen zusammengefassten optischen Netzwerkendgeräten verbunden ist, **dadurch gekennzeichnet, dass** es ein Empfangsmodul (250) umfasst, das geeignet ist, nach einem Vergleichen eines Sendezeitplans mit den von diesen Endgeräten gesendeten Signalen aus einem optischen Signal, das von einem zwischen dem optischen Leitungsendgerät und der Vielzahl von optischen Netzwerkendgeräten angeordneten Erweiterungsgehäuse kommt, eine Verwaltungsinformation bezüglich des Trennens oder Wiederverbindens einer Gruppe von optischen Leitungsendgeräten auszukoppeln, wobei die Verwaltungsinformation die Kennung der Gruppe und eine Aufforderung zum Beenden des Sendens oder zum Synchronisieren aller optischen Netzwerkendgeräte der Gruppe umfasst, und ein Modul (240) zum Senden des Zeitplans und von Verwaltungsnachrichten, die Befehle zum Beenden des Sendens und Synchronisationsbefehle beinhalten.

8. Erweiterungsgehäuse für ein passives optisches Netzwerk, das geeignet ist, zwischen einem optischen Leitungsendgerät und einer Vielzahl von optischen Netzwerkendgeräten angeordnet zu werden, **dadurch gekennzeichnet, dass** es eine Schutzvorrichtung (100, 101) zum Schutz eines passiven optischen Netzwerks nach Anspruch 6 umfasst.

9. Optisches Leitungsendgerät für ein passives optisches Netzwerk, das geeignet ist, mit einer Vielzahl von optischen Netzwerkendgeräten verbunden zu werden, **dadurch gekennzeichnet, dass** es mindestens eine Verwaltungsvorrichtung (200) zur Verwaltung eines passiven optischen Netzwerks nach Anspruch 7 umfasst.

10. Optisches Leitungsendgerät nach Anspruch 9, **dadurch gekennzeichnet, dass** es ferner eine Schutzvorrichtung (101) für ein passives optisches Netzwerk nach Anspruch 6 umfasst.

11. System zum Schutz eines passiven optischen Netzwerks, das aus einem optischen Leitungsendgerät besteht, welches mit einer Vielzahl von optischen Netzwerkendgeräten verbunden ist, **dadurch gekennzeichnet, dass** es mindestens eine Schutzvorrichtung (100, 101) für ein passives optisches Netzwerk nach Anspruch 6 und mindestens eine Verwaltungsvorrichtung (200) für ein passives optisches Netzwerk nach Anspruch 7 umfasst.

12. Computerprogramm, **dadurch gekennzeichnet, dass** es Anweisungen zum Ausführen eines Verfahrens zum Schutz eines passiven optischen Netzwerks nach Anspruch 1 umfasst, wenn dieses Programm von einem Prozessor abgearbeitet wird.

13. Computerprogramm, **dadurch gekennzeichnet, dass** es Anweisungen zum Ausführen eines Verfahrens zur Verwaltung eines passiven optischen Netzwerks nach Anspruch 5 umfasst, wenn dieses Programm von einem Prozessor abgearbeitet wird.

## Claims

1. **Method of protection** of a passive optical network consisting of an optical line terminal connected to a plurality of optical network terminals grouped set-wise, implemented in an extension box situated between the optical line terminal and the plurality of optical network terminals, comprising the following steps:
- obtaining (E2, F2) of a send schedule for the optical network terminals,
- comparison, (E4a, F4a) by set, of the schedule with the signals sent by the optical network terminals, and if at least one optical network terminal of a set does not send in synchronization with the schedule:
- disconnection (E4b) of this set,
the method being **characterized in that** it furthermore comprises the following steps:
- sending (E4c, F4d), to the optical line terminal, of a first management cue relating to the disconnection of the set, comprising the identifier of the set and a request for cessation of sending of all the optical network terminals of the set,
- verification (F4aa) of the cessation of sending of the optical network terminals of the set,
- reconnection (F4b) of the set if cessation of sending is verified.

2. **Method of protection** according to Claim 1, where the first management cue relating to the disconnection of the set furthermore comprises the identifiers of the optical network terminals of the set.

3. **Method of protection** according to Claim 1, where the step of reconnecting a set is followed by the following step:
- sending (F4c), to the optical line terminal, of a second management cue relating to the reconnection of the set, comprising the identifier of the set and a request for resynchronization of all the optical network terminals of the set.

4. **Method of protection** according to Claim 3, where the second management cue relating to the reconnection of the set furthermore comprises the identifiers of the optical network terminals of the set.

5. **Method of management** of a passive optical network consisting of an optical line terminal connected to a plurality of optical network terminals grouped set-wise, implemented by the optical line terminal and **characterized in that** it comprises the following step:
- receiving (E5, F5, F5aa, F9), originating from an extension box situated between the optical line terminal and the plurality of optical network terminals, of a management cue relating to the disconnection or to the reconnection of a set of optical line terminals, subsequent to a comparison of a send schedule with the signals sent by these terminals, the management cue comprising the identifier of the set and a request for cessation of sending or of synchronization of all the optical network terminals of the set,
prior to one of the following steps:
- sending (E5a) of a command for cessation of sending of all the optical network terminals of the set, if the management cue relates to a disconnection,
- sending (F5a) of a command for resynchronization of all the optical network terminals of the set, if the management cue relates to a reconnection.

6. **Protection device** (100, 101) for a passive optical network consisting of an optical line terminal connected to a plurality of optical network terminals grouped set-wise, comprising:
- a module (140) for obtaining a send schedule for the optical network terminals,
- means (130) for comparing, set-wise, the schedule with the signals sent by the optical network terminals, and for deciding disconnection and reconnection of a set,
- an interrupter module (160) able to disconnect and to reconnect the set, the device being **characterized in that** it further comprises:
- a request module (170) able to insert management cues into an optical signal destined for the optical line terminal, the management cues comprising the identifier of the set and a request for cessation of sending or of synchronization of all the optical network terminals of the set.

7. **Management device** (200) for a passive optical network consisting of an optical line terminal connected to a plurality of optical network terminals grouped set-wise, **characterized in that** it comprises a reception module (250) able to extract from a signal originating from an extension box, situated between the optical line terminal and the plurality of optical network terminals, a management cue relating to the disconnection or to the reconnection of a set of optical line terminals, subsequent to a comparison of a send schedule with the signals sent by these terminals, the management cue comprising the identifier of the set and a request for cessation of sending or of synchronization of all the optical network terminals of the set, and a sending module (240) for the schedule and for management messages including send cessation orders and synchronization orders.

8. **Extension box** for a passive optical network, capable of being situated between an optical line terminal and a plurality of optical network terminals, **characterized in that** it comprises a protection device (100, 101) of a passive optical network according to Claim 6.

9. **Optical line terminal** for a passive optical network, capable of being connected to a plurality of optical network terminals, **characterized in that** it comprises at least one management device (200) of a passive optical network according to Claim 7.

10. **Optical line terminal** according to Claim 9, **characterized in that** it furthermore comprises a protection device (101) for a passive optical network according to Claim 6.

11. **System for protection** of a passive optical network consisting of an optical line terminal connected to a plurality of optical network terminals, **characterized in that** it comprises at least one protection device (100, 101) for a passive optical network according to Claim 6, and at least one management device (200) for a passive optical network according to Claim 7.

12. Computer **program, characterized in that** it comprises instructions for the implementation of a method of protection of a passive optical network, according to Claim 1, when this program is executed by a processor.

13. Computer **program, characterized in that** it comprises instructions for the implementation of a method of management of a passive optical network, according to Claim 5, when this program is executed by a processor.
